# EUROPEAN PATENT SPECIFICATION

(11) **EP 3 531 253 B1**
(45) Date of publication and mention of the grant of the patent: **25.10.2023**
(21) Application number: 17873114.7
(22) Date of filing: 19.01.2017
(51) Int. Cl.: G06F 3/0354, G06F 1/16, G06F 1/26

(54) **CHARGEABLE STYLUS, ELECTRONIC DEVICE AND PLUG**
AUFLADBARER STIFT, ELEKTRONISCHE VORRICHTUNG UND STECKER
STYLET POUVANT ÊTRE CHARGÉ, DISPOSITIF ÉLECTRONIQUE ET FICHE

(30) Priority: 26.11.2016 CN 201611057243
(43) Date of publication of application: 28.08.2019
(73) Proprietor: Huawei Technologies Co., Ltd., Longgang District Shenzhen, Guangdong 518129 (CN)
(72) Inventor: ZHENG, Tao, Shenzhen Guangdong 518129 (CN); ZHI, Yuan, Shenzhen Guangdong 518129 (CN)
(74) Representative: Gill Jennings & Every LLP
(86) International application number: PCT/CN2017/071778
(87) International publication number: WO 2018/094869

(56) References cited:
- CN-A- 104 541 520
- CN-A- 104 541 520
- CN-A- 105 615 841
- CN-U- 202 632 226
- US-A1- 2006 197 755
- US-A1- 2016 055 478

## Description

### TECHNICAL FIELD

This application relates to the stylus field, and in particular, to a rechargeable stylus, an electronic device, and a plug.

### BACKGROUND

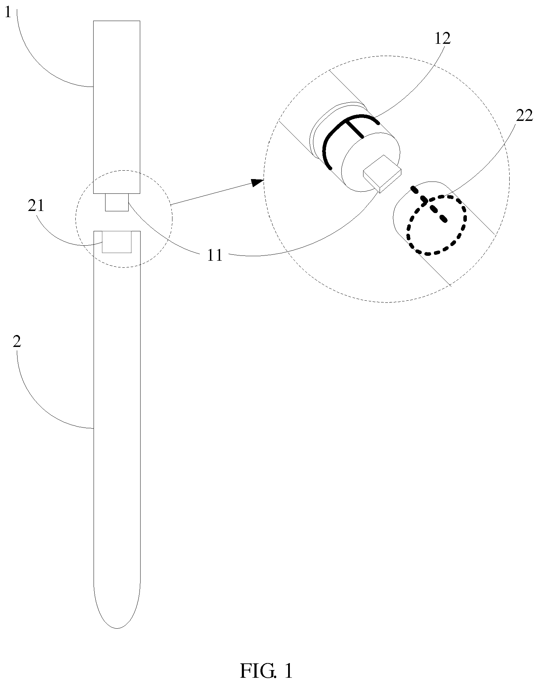

Currently, a stylus is a common input apparatus used with an electronic device (such as a mobile phone or a tablet computer). Styluses include rechargeable and non-rechargeable styluses. FIG. 1 shows an existing rechargeable stylus structure, including a first body 1 and a second body 2. A male connector 11 of a micro universal serial bus (micro universal serial bus, Micro USB) is disposed at a connection end of the first body 1. A female connector 21 of the micro USB is disposed at a connection end of the second body 2. When the first body 1 and the second body 2 are separated, the first body 1 may be charged by using the male connector 11, or the second body 2 may be charged by using the female connector 21. In addition, in a connection structure shown in FIG. 1, a first convex rib 12 is further disposed around the connection end of the first body 1, and a second convex rib 22 is disposed around the connection end of the second body 2. When the first body 1 and the second body 2 are connected, the male connector 11 is inserted into the female connector 21 to ensure electric power transmission between the two bodies. Moreover, the first body 1 and the second body 2 are fastened and connected as a complete stylus through interlocking of the first convex rib 12 and the second convex rib 22.

However, the foregoing stylus structure has the following disadvantages: On the one hand, a micro USB is being phased out by a type C (type C) USB; however, the type C USB has large-sized male and female connectors, which are not suitable to replace the male and female connectors of the micro USB in the foregoing stylus structure, and are unfavorable for charging the stylus. On the other hand, when the foregoing convex rib structure is used to fasten the first body and the second body, poor abrasion resistance causes low connection reliability, and in addition, it is difficult to ensure concentricity after assembly, resulting in poor handfeel.

CN 104541520 A discloses a headphone socket that can be used to charge headphones. US 2006/197755 A1 discloses a cable assembly having a connector for coupling to at least one of a stylus and a display assembly. US 2016/0055478 A1 discloses an energy-harvesting bidirectional audio interface. CN 105615841 A discloses an electronic thermometer with a wirelessly connected controller module and terminal module.

### SUMMARY

Embodiments of the invention provide a device according to claim 1. Further examples are set out in the dependent claims.

According to a first aspect, an embodiment of this application provides a rechargeable stylus, comprising a column-shaped plug disposed at one end of a first body, wherein a first ring-shaped contact and a second ring-shaped contact are disposed in turn from a fixed end to a top end in a radial direction on a body of the plug; a rechargeable first circuit is disposed inside the first body of the stylus, and the first circuit has two charging ends, with one being a ground end and the other being a positive voltage end; the first ring-shaped contact and the second ring-shaped contact are electrically connected to the two charging ends, respectively; and the first ring-shaped contact and the second ring-shaped contact are allowed to be inserted into a headset socket with a microphone pin and a ground pin, and the microphone pin is capable of providing positive voltage for charging; and when the first ring-shaped contact and the second ring-shaped contact are completely inserted into the headset socket, the first ring-shaped contact is in electrical contact with the ground pin of the headset socket, and the second ring-shaped contact is in electrical contact with the microphone pin of the headset socket; or the first ring-shaped contact is in electrical contact with the microphone pin of the headset socket, and the second ring-shaped contact is in electrical contact with the ground pin of the headset socket, so that the microphone pin is electrically connected to the positive voltage end, the ground pin is electrically connected to the ground end, and the first circuit is charged by using the microphone pin and the ground pin. The stylus further comprises a second body, a socket is disposed at a connection end of the second body, the socket comprises an insulated socket body, a cavity-structured jack is provided inside the socket body, and a first pin and a second pin are disposed in turn from a jack hole inwards on an inner wall of the jack; and
when the first ring-shaped contact and the second ring-shaped contact are completely inserted into the jack, the first ring-shaped contact is in electrical contact with the first pin, and the second ring-shaped contact is in electrical contact with the second pin.In a possible design, a third ring-shaped contact and a fourth contact are further disposed in turn from the fixed end to the top end in the radial direction on the body of the plug. Correspondingly, the headset socket further has a left-channel pin and a right-channel pin. Therefore, when the first ring-shaped contact and the second ring-shaped contact of the plug are completely inserted into the foregoing headset socket, the third ring-shaped contact can be in electrical contact with the right-channel pin, and the fourth contact can be in electrical contact with the left-channel pin, so that data can be transmitted to the first body of the stylus by using the left-channel pin and the right-channel pin of the headset socket. Therefore, the headset socket can be used to not only charge the stylus but also transmit data to the stylus, expanding an application scope of the embodiment of this application.

When the first ring-shaped contact and the second ring-shaped contact are completely inserted into the jack, the first ring-shaped contact is in electrical contact with the first pin, and the second ring-shaped contact is in electrical contact with the second pin, so that a channel is formed between the first ring-shaped contact and the first pin, and another channel is formed between the second ring-shaped contact and the second pin. Then, electric power or data can be transmitted between the first body and the second body through the two conduction channels.

In a possible design, a third pin and a fourth pin are further disposed in turn from the jack hole inwards in a radial direction on the inner wall of the jack. When the first ring-shaped contact and the second ring-shaped contact are completely inserted into the jack, the third pin is in electrical contact with the third ring-shaped contact, and the fourth pin is in electrical contact with the fourth contact, so that a channel is formed between the third ring-shaped contact and the third pin, and another channel is formed between the fourth contact and the fourth pin. Then, electric power or data can be transmitted between the first body and the second body through the two conduction channels.

In a possible design, a ring-shaped structure with external screw threads is further disposed at the fixed end of the body of the plug, a ring-shaped structure with internal screw threads is disposed at the jack hole in the inner wall of the jack, and the ring-shaped structure with internal screw threads and the ring-shaped structure with external screw threads are allowed to be mutually screwed. When the ring-shaped structure with internal screw threads is completely screwed into the ring-shaped structure with external screw threads, the first ring-shaped contact and the second ring-shaped contact are completely inserted into the jack, and the first body and the second body are screwed to form a complete stylus. The ring-shaped structure with external screw threads of the plug on the first body is screwed into the ring-shaped structure with internal screw threads of the socket on the second body, to implement a secure structural connection between the first body and the second body, ensuring concentricity of the first body and the second body. This not only ensures that the first body is not apt to fall off or shift from the second body, but also ensures that various contacts of the plug on the first body are in good electrical contact with corresponding pins of the socket on the second body.

Compared with the prior art, in the solution provided in this embodiment of this application, the ring-shaped structure with external screw threads of the plug on the first body of the rechargeable stylus is screwed into the ring-shaped structure with internal screw threads of the socket on the second body, to implement a secure structural connection between the first body and the second body, ensuring concentricity of the first body and the second body. This not only ensures that the first body is not apt to fall off or shift from the second body, but also ensures that various contacts of the plug on the first body are in good electrical contact with corresponding pins of the socket on the second body. In addition, the first ring-shaped contact of the plug on the first body is in electrical contact with the first pin of the socket on the second body, and the second ring-shaped contact of the plug on the first body is in electrical contact with the second pin of the socket on the second body, ensuring electric power transmission between the first body and the second body. Moreover, when the first ring-shaped contact and the second ring-shaped contact of the plug on the first body are completely inserted into the headset socket with the microphone pin, the first ring-shaped contact is in electrical contact with the microphone pin of the headset socket, the second ring-shaped contact is in electrical contact with the ground pin of the headset socket, and the microphone pin of the headset socket can provide positive voltage for charging, allowing the headset socket to charge the first body.

### BRIEF DESCRIPTION OF DRAWINGS

To describe the technical solutions in the embodiments of this application or in the prior art more clearly, the following briefly describes the accompanying drawings required for describing the embodiments or the prior art.
FIG. 1 is a schematic structural diagram of a stylus in the prior art;
FIG. 2 is a schematic structural diagram of a plug of a headset without a microphone in the prior art;
FIG. 3 is a schematic structural diagram of a socket of a headset without a microphone in the prior art;
FIG. 4 is a schematic diagram illustrating that a plug of a headset without a microphone is inserted into a socket of the headset in the prior art;
FIG. 5 is a schematic structural diagram of a plug of a headset with a microphone in the prior art;
FIG. 6 is a schematic structural diagram of a socket of a headset with a microphone in the prior art;
FIG. 7 is a schematic diagram illustrating that a plug of a headset with a microphone is inserted into a socket of the headset in the prior art;
FIG. 8 is a schematic structural diagram of a plug of another headset with a microphone in the prior art;
FIG. 9 is a schematic structural diagram of a socket of another headset with a microphone in the prior art;
FIG. 10 is a schematic diagram illustrating that a plug of another headset with a microphone is inserted into a socket of the headset in the prior art;
FIG. 11 is a schematic structural diagram of a column-shaped plug according to an embodiment of this application;
FIG. 12 is a schematic structural diagram of another column-shaped plug according to an embodiment of this application;
FIG. 13 is a schematic side view of another column-shaped plug according to an embodiment of this application;
FIG. 14 is a schematic structural diagram of a socket according to an embodiment of this application;
FIG. 15 is a schematic side view of a socket according to an embodiment of this application;
FIG. 16 is a schematic diagram illustrating that a plug is inserted into a socket according to an embodiment of this application;
FIG. 17 is a schematic diagram illustrating that another plug is inserted into a socket according to an embodiment of this application;
FIG. 18 is a schematic structural diagram of another socket according to an embodiment of this application;
FIG. 19 is a schematic diagram illustrating that still another plug is inserted into a socket according to an embodiment of this application;
FIG. 20 is a schematic diagram illustrating that yet another plug is inserted into a socket according to an embodiment of this application;
FIG. 21 is a schematic structural diagram of a rechargeable stylus according to an embodiment of this application;
FIG. 22 is a schematic diagram of an example of a first circuit according to an embodiment of this application;
FIG. 23 is a schematic diagram of a stylus with a first body and a second body being screwed according to an embodiment of this application;
FIG. 24 is a schematic structural diagram of another rechargeable stylus according to an embodiment of this application;
FIG. 25 is a schematic diagram of another stylus with a first body and a second body being screwed according to an embodiment of this application;
FIG. 26 is a schematic structural diagram of an electronic device according to an embodiment of this application;
FIG. 27 is a schematic structural diagram of another electronic device according to an embodiment of this application;
FIG. 28 is a schematic diagram illustrating that a first body of a stylus is inserted into an electronic device according to an embodiment of this application;
FIG. 29 is a schematic diagram illustrating that a first body of another stylus is inserted into an electronic device according to an embodiment of this application;
FIG. 30 is a schematic structural diagram of still another rechargeable stylus according to an embodiment of this application;
FIG. 31 is a schematic diagram of still another stylus with a first body and a second body being screwed according to an embodiment of this application;
FIG. 32 is a schematic structural diagram of yet another rechargeable stylus according to an embodiment of this application;
FIG. 33 is a schematic diagram of yet another stylus with a first body and a second body being screwed according to an embodiment of this application;
FIG. 34 is a schematic diagram illustrating that a first body of another stylus is inserted into an electronic device according to an embodiment of this application; and
FIG. 35 is a schematic diagram illustrating that a first body of yet another stylus is inserted into an electronic device according to an embodiment of this application.

Drawing reference numbers:
1-first body, 11-male connector, 12-first convex rib, 2-second body, 21-female connector, 22-second convex rib, 3-headset plug, 31-left-channel contact, 32-right-channel contact, 33-ground contact, 34-microphone contact, 4-headset socket, 41-left-channel pin, 42-right-channel pin, 43-ground pin, 44-microphone pin, 5-first body, 51-plug, 511-ring-shaped structure with external screw threads, 512-first ring-shaped contact, 513-second ring-shaped contact, 514-third ring-shaped contact, 515-fourth contact, 52-first circuit, 521-first charging end, 522-second charging end, 523-charging chip, 524-rechargeable battery, 53-first conducting wire, 54-second conducting wire, 55-third circuit, 56-fifth conducting wire, 57-sixth conducting wire, 6-second body, 61-socket, 610-socket body, 611-jack, 612-ring-shaped structure with internal screw threads, 613-first pin, 614-second pin, 615-third pin, 616-fourth pin, 62-second circuit, 63-third conducting wire, 64-fourth conducting wire, 65-seventh conducting wire, 66-eighth conducting wire, 7-electronic device, 71-power supply, 72-boost chip, and 73-resistor.

### DESCRIPTION OF EMBODIMENTS

The following describes embodiments of this application with reference to accompanying drawings.

In the prior art, data transmission is implemented between a headset socket and a headset plug through electrical contact between a contact of the headset plug and a corresponding pin of the headset socket.

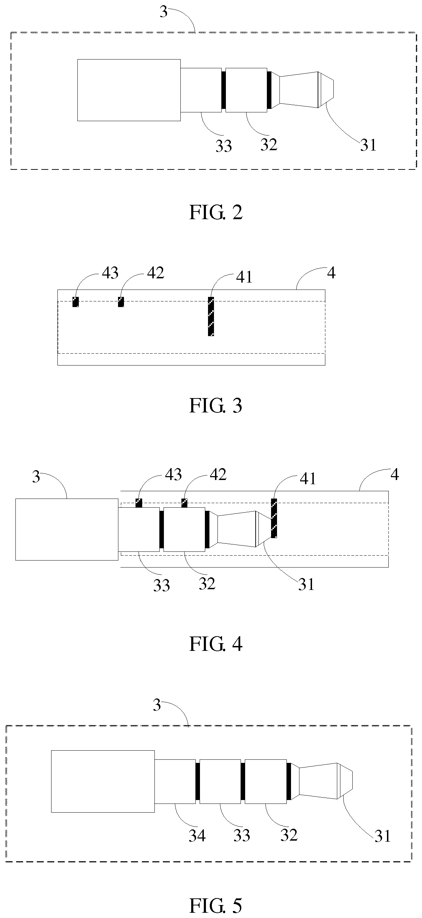

FIG. 2 is a schematic structural diagram of a plug of a headset without a microphone. A left-channel contact 31, a right-channel contact 32, and a ground (ground, GND) contact 33 are disposed in turn on a body of a headset plug 3. FIG. 3 is a schematic structural diagram of a corresponding socket of a headset without a microphone. A left-channel pin 41, a right-channel pin 42, and a ground pin 43 are disposed in turn on an inner wall of a headset jack of a headset socket 4. As shown in FIG. 4, when the headset plug 3 is completely inserted into the headset socket 4, the left-channel contact 31 is in electrical contact with the left-channel pin 41, the right-channel contact 32 is in electrical contact with the right-channel pin 42, and the ground contact 33 is in electrical contact with the ground pin 43.

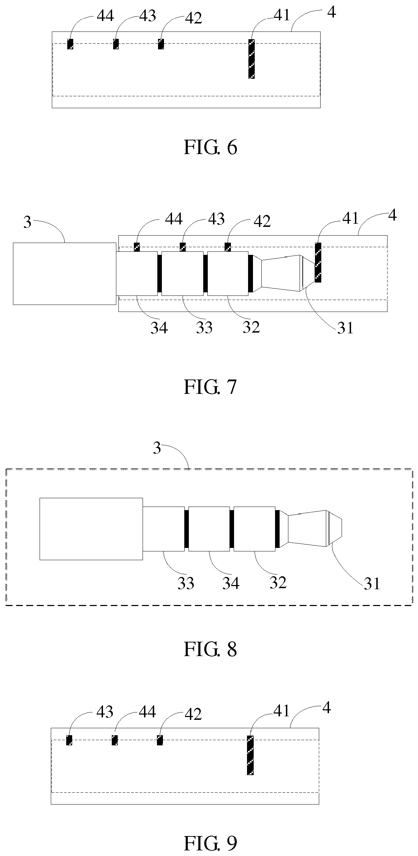

FIG. 5 is a schematic structural diagram of a plug of a headset with a microphone. A difference from a structure of the headset plug shown in FIG. 2 is that a microphone (microphone, MIC) contact 34 is further disposed on a body of a headset plug 3. FIG. 6 is a schematic structural diagram of a socket of a headset with a microphone. A difference from a structure of the headset socket shown in FIG. 3 is that a microphone pin 44 is further disposed at a corresponding position on an inner wall of a headset jack of a headset socket 4. As shown in FIG. 7, when the headset plug 3 is completely inserted into the headset socket 4, a left-channel contact 31 is in electrical contact with a left-channel pin 41, a right-channel contact 32 is in electrical contact with a right-channel pin 42, a ground contact 33 is in electrical contact with a ground pin 43, and the microphone contact 34 is in electrical contact with the microphone pin 44.

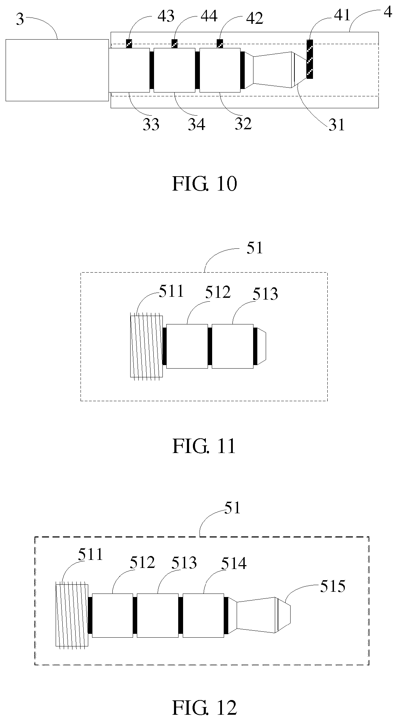

FIG. 8 is a schematic structural diagram of a plug of another headset with a microphone. A difference between FIG. 8 and FIG. 5 is that positions of a ground contact 33 and a microphone contact 34 are reversed on a body of a headset plug 3. FIG. 9 is a schematic structural diagram of a corresponding socket of another headset with a microphone. A difference between FIG. 9 and FIG. 6 is that positions of a ground pin 43 and a microphone pin 44 are reversed on an inner wall of a headset jack of a headset socket 4. As shown in FIG. 10, when the headset plug 3 is completely inserted into the headset socket 4, a left-channel contact 31 is in electrical contact with a left-channel pin 41, a right-channel contact 32 is in electrical contact with a right-channel pin 42, the ground contact 33 is in electrical contact with the ground pin 43, and the microphone contact 34 is in electrical contact with the microphone pin 44.

It should be noted that the embodiments of this application provide a rechargeable stylus as an example. A person skilled in the art may figure out that the embodiments of this application are also applicable to another electronic device with a charging requirement, and details are not described herein.

An embodiment of this application provides a column-shaped plug. As shown in FIG. 11, a ring-shaped structure 511 with external screw threads, a first ring-shaped contact 512, and a second ring-shaped contact 513 are disposed in turn from a fixed end to a top end in a radial direction on a body of a plug 51. The ring-shaped structure 511 with external screw threads, the first ring-shaped contact 512, and the second ring-shaped contact 513 are coaxial. In addition, a diameter of the ring-shaped structure 511 with external screw threads is greater than a diameter of the first ring-shaped contact 512, and the diameter of the ring-shaped structure 511 with external screw threads is greater than a diameter of the second ring-shaped contact 513.

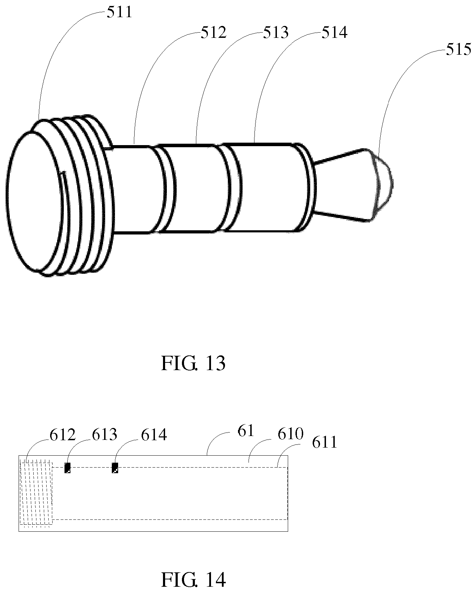

An embodiment of this application provides another column-shaped plug. As shown in FIG. 12, a difference from the plug shown in FIG. 11 is that a third ring-shaped contact 514 and a fourth contact 515 are further disposed in turn from a fixed end to a top end in a radial direction on a body of a plug 51. A ring-shaped structure 511 with external screw threads, a first ring-shaped contact 512, a second ring-shaped contact 513, the third ring-shaped contact 514, and the fourth contact 515 are coaxial. A schematic side view of the column-shaped plug is shown in FIG. 13.

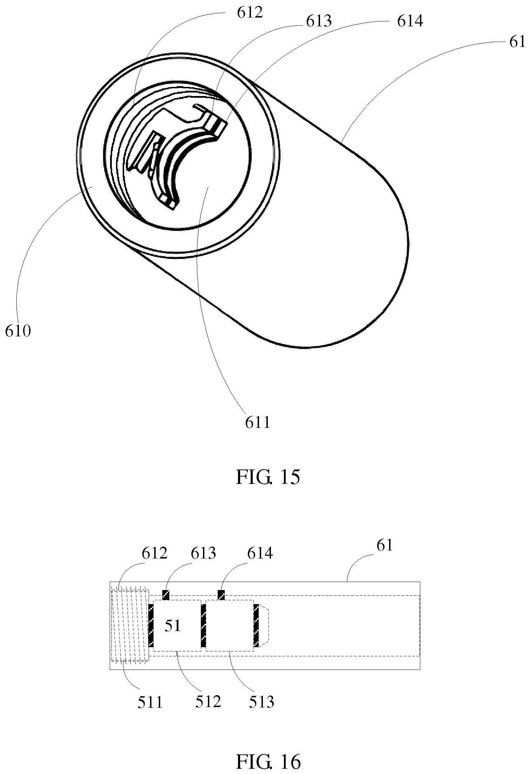

An embodiment of this application provides a socket. As shown in FIG. 14, a socket 61 includes an insulated socket body 610, a cavity-structured jack 611 is provided inside the socket body 610, a ring-shaped structure 612 with internal screw threads, a first pin 613, and a second pin 614 are disposed in turn from a jack hole inwards in a radial direction on an inner wall of the jack 611. The ring-shaped structure 612 with internal screw threads and the ring-shaped structure 511 with external screw threads of the plug 51 shown in FIG. 11 or FIG. 12 are allowed to be mutually screwed. A schematic side view of the socket is shown in FIG. 15.

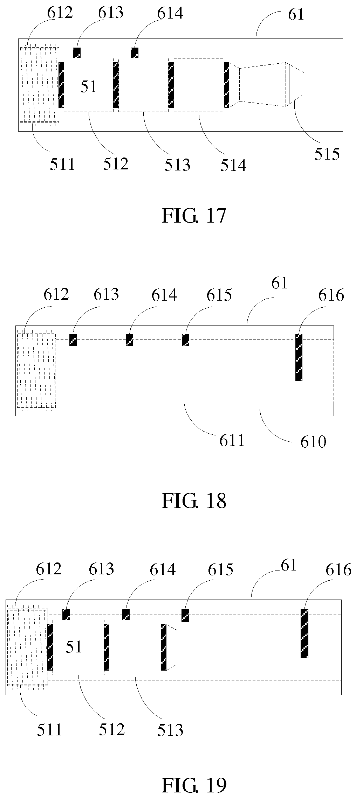

As shown in FIG. 16 and FIG. 17, when the ring-shaped structure 511 with external screw threads of the plug 51 shown in FIG. 11 or FIG. 12 is completely screwed into the ring-shaped structure 612 with internal screw threads, a secure structural connection between the plug 51 and the socket 61 is implemented. In addition, the first pin 613 is in electrical contact with the first ring-shaped contact 512, and the second pin 614 is in electrical contact with the second ring-shaped contact 513. FIG. 16 is corresponding to the plug shown in FIG. 11, and FIG. 17 is corresponding to the plug shown in FIG. 12.

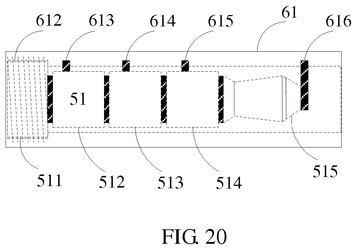

An embodiment of this application provides another socket. As shown in FIG. 18, a difference from the socket shown in FIG. 14 is that a third pin 615 and a fourth pin 616 are further disposed in turn from a jack hole inwards in a radial direction on an inner wall of a jack 611. As shown in FIG. 19, when the ring-shaped structure 511 with external screw threads of the plug 51 shown in FIG. 11 is completely screwed into a ring-shaped structure 612 with internal screw threads, the third pin 615 and the fourth pin 616 are not in electrical contact with contacts of the plug 51. As shown in FIG. 20, when the ring-shaped structure 511 with external screw threads of the plug 51 shown in FIG. 12 is completely screwed into the ring-shaped structure 612 with internal screw threads, the third pin 615 is in electrical contact with the third ring-shaped contact 514, and the fourth pin 616 is in electrical contact with the fourth contact 515.

According to the plug and the socket provided in the embodiments of this application, the ring-shaped structure with external screw threads of the plug is screwed into the ring-shaped structure with internal screw threads of the socket, to implement a secure structural connection between the plug and the socket, ensuring concentricity of the plug and the socket. This not only ensures that the plug is not apt to fall off or shift from the socket, but also ensures that various contacts of the plug are in good electrical contact with corresponding pins of the socket.

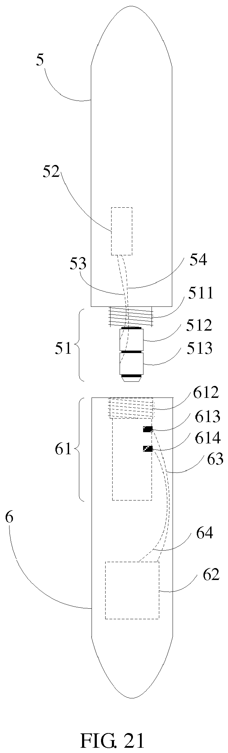

An embodiment of this application provides a rechargeable stylus. As shown in FIG. 21, the rechargeable stylus includes a first body 5 and a second body 6. The column-shaped plug 51 shown in FIG. 11 is disposed at a connection end of the first body 5. A rechargeable first circuit 52 is disposed inside the first body 5, and the first circuit 52 has two charging ends, with one being a ground end and the other being a positive voltage end. The first ring-shaped contact 512 is electrically connected to one charging end of the first circuit 52 by using a first conducting wire 53 routed through a ring-shaped structure 511 with external screw threads; and the second ring-shaped contact 513 is electrically connected to the other charging end of the first circuit 52 by using a second conducting wire 54 routed through the ring-shaped structure 511 with external screw threads. The socket 61 shown in FIG. 14 is disposed at a connection end of the second body 6. A second circuit 62 is disposed inside the second body 6. The first pin 613 is electrically connected to the second circuit 62 by using a third conducting wire 63, and the second pin 614 is electrically connected to the second circuit 62 by using a fourth conducting wire 64.

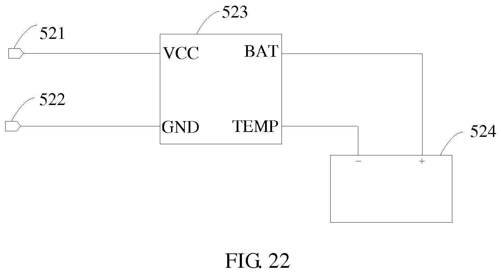

The first circuit 52 may include a rechargeable battery. On the one hand, the rechargeable battery may be charged by using the first ring-shaped contact 512 and the second ring-shaped contact 513. On the other hand, the rechargeable battery may supply power to another working circuit of the stylus. For example, as shown in FIG. 22, the first circuit 52 may include a first charging end 521, a second charging end 522, a charging chip 523, and a rechargeable battery 524. The first charging end 521 is electrically connected to an input pin VCC of the charging chip 523, the second charging end 522 is electrically connected to an input pin GND of the charging chip 523, an output pin BAT of the charging pin 523 is electrically connected to a positive electrode of the rechargeable battery 524, and an output pin TEMP of the charging chip 523 is electrically connected to a negative electrode of the rechargeable battery 524. When the first ring-shaped contact 512 is connected to positive voltage and the second ring-shaped contact 513 is grounded, the first ring-shaped contact 512 is electrically connected to the first charging end 521, and the second ring-shaped contact 513 is electrically connected to the second charging end 522; or when the first ring-shaped contact 512 is grounded and the second ring-shaped contact 513 is connected to positive voltage, the first ring-shaped contact 512 is electrically connected to the second charging end 522, and the second ring-shaped contact 513 is electrically connected to the first charging end 521. It should be noted that other circuit connection forms of the first circuit 52 that can be figured out based on different rechargeable batteries or charging chips by a person skilled in the art shall fall within the protection scope of the embodiments of this application, and details are not described herein.

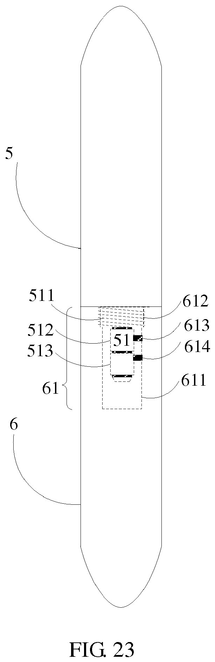

As shown in FIG. 23, when the ring-shaped structure 511 with external screw threads is completely screwed into the ring-shaped structure 612 with internal screw threads, the first ring-shaped contact 512 and the second ring-shaped contact 513 are completely inserted into the jack 611, and the first body 5 and the second body 6 are screwed to form a complete stylus. The first ring-shaped contact 512 is in electrical contact with the first pin 613, and the second ring-shaped contact 513 is in electrical contact with the second pin 614, so that a channel is formed between the first ring-shaped contact 512 and the first pin 613, and another channel is formed between the second ring-shaped contact 513 and the second pin 614. In this case, two conduction channels can be implemented between the first circuit 52 in the first body 5 and the second circuit 62 in the second body 6. To be specific, conduction is implemented between the first conducting wire 53 and the third conducting wire 63, and conduction is implemented between the second conducting wire 54 and the fourth conducting wire 64. Therefore, the first circuit 52 and the second circuit 62 may be designed to reuse a function of the first ring-shaped contact 512 and the second ring-shaped contact 513. For example, electric power transmission or data transmission may be implemented between the first body 5 and the second body 6.

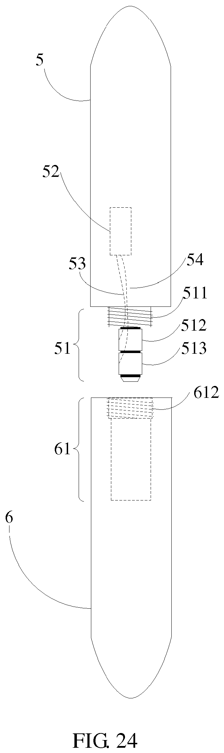

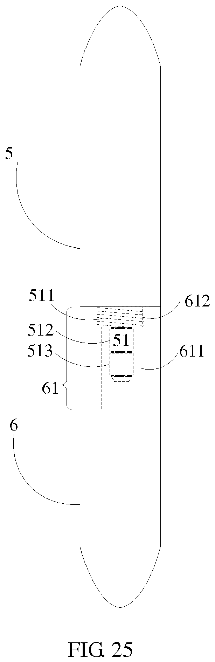

It should be noted that the second body is optional in this embodiment of this application. After the second body and the first body form a complete stylus, a structure used for charging, such as a plug, cannot be seen from appearance. An embodiment of this application provides another rechargeable stylus. As shown in FIG. 24, compared with the stylus shown in FIG. 21, the second circuit 62, the third conducting wire 63, the fourth conducting wire 64, and the first pin 613 and the second pin 614 of the socket 61 are removed. Therefore, a structure of a second body 6 is simpler. This structure is used when a first body 5 and a plug 51 need to be fastened only by screwing a ring-shaped structure 511 with external screw threads and a ring-shaped structure 612 with internal screw threads and no electric power or data exchange is required between the first body 5 and the second body 6. As shown in FIG. 25, when the rotational structure 511 with external screw threads of the first body 5 is completely screwed into the rotational structure 612 with internal screw threads of the second body 6, a first ring-shaped contact 512 and a second ring-shaped contact 513 are completely inserted into a jack 611, and the first body 5 and the second body 6 are screwed to form a complete stylus.

The first ring-shaped contact 512 and the second ring-shaped contact 513 are allowed to be inserted into the headset socket with the microphone pin 44 and the ground pin 43 shown in FIG. 6 or FIG. 9, and the microphone pin 44 of the headset socket is capable of providing positive voltage for charging.

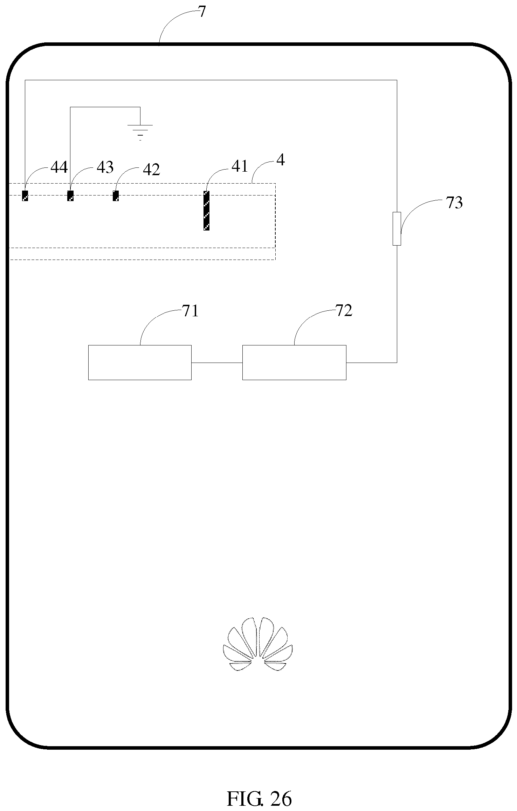

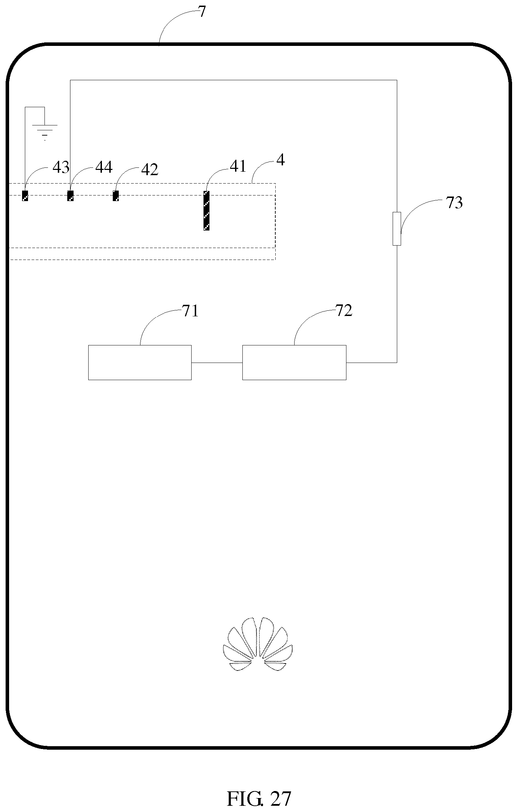

Therefore, for example, an embodiment of this application provides an electronic device 7. As shown in FIG. 26, the electronic device includes the headset socket 4 with the microphone pin shown in FIG. 6; or, as shown in FIG. 27, the electronic device includes the headset socket 4 with the microphone pin shown in FIG. 9. Moreover, the electronic device further includes a power supply 71, a boost chip 72, and a resistor 73. The power supply 71 may be a rechargeable battery in the electronic device 7. It is assumed that voltage of the power supply 71 is 4 V First, the boost chip 72 boosts the voltage of the power supply 71 from 4 V to 5 V After the voltage is divided as little as possible by the resistor 73, the voltage is output to the microphone pin 44 and is used to provide positive voltage for charging. The ground pin 43 is grounded. Thus, the electronic device 7 is capable of supplying power externally by using the microphone pin 44 of the headset socket 4.

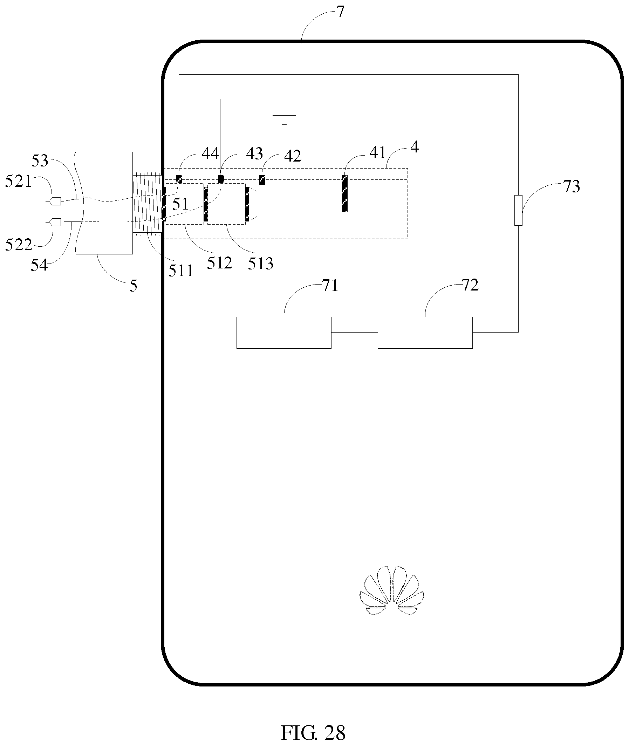

As shown in FIG. 28, when a plug 51 of a first body 5 is completely inserted into the headset socket 4 of the electronic device 7 shown in FIG. 26 (that is, when a first ring-shaped contact 512 and a second ring-shaped contact 513 are completely inserted into the headset socket 4 of the electronic device 7), the first ring-shaped contact 512 is in electrical contact with the microphone pin 44, and the second ring-shaped contact 513 is in electrical contact with the ground pin 43. Equivalently, the first ring-shaped contact 512 is connected to positive voltage, and the second ring-shaped contact 513 is grounded. In this case, the first ring-shaped contact 512 is electrically connected to a first charging end 521 by using a first conducting wire 53, and the second ring-shaped contact 513 is electrically connected to a second charging end 522 by using a second conducting wire 54. This can implement charging of the first body 5 of a stylus by the electronic device 7, and a third-party cable does not need to be connected to charge the first body 5.

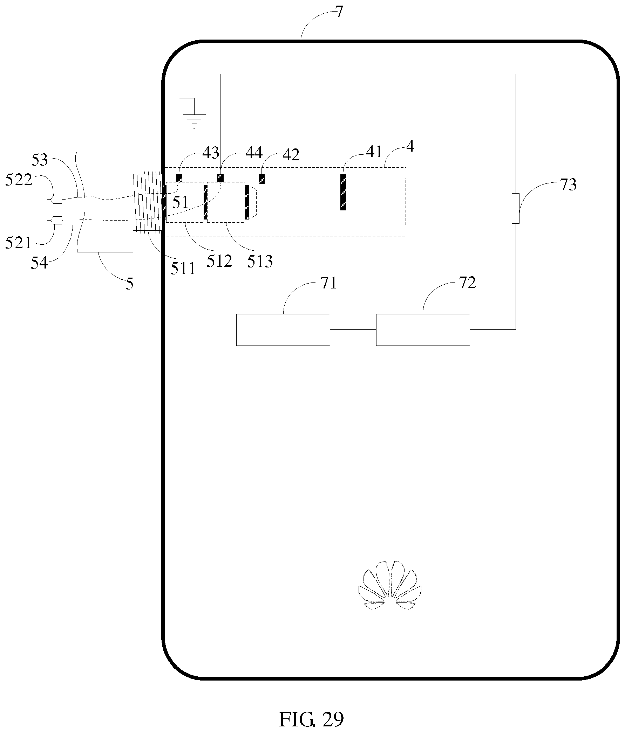

As shown in FIG. 29, when the plug 51 of the first body 5 is completely inserted into the headset socket 4 of the electronic device 7 shown in FIG. 27 (that is, when the first ring-shaped contact 512 and the second ring-shaped contact 513 are completely inserted into the headset socket 4 of the electronic device 7), the first ring-shaped contact 512 is in electrical contact with the ground pin 43, and the second ring-shaped contact 513 is in electrical contact with the microphone pin 44. Equivalently, the first ring-shaped contact 512 is grounded, and the second ring-shaped contact 513 is connected to the positive voltage. In this case, the first ring-shaped contact 512 is electrically connected to the second charging end 522 by using the first conducting wire 53, and the second ring-shaped contact 513 is electrically connected to the first charging end 521 by using the second conducting wire 54. This can also implement charging of the first body 5 of the stylus by the electronic device 7.

In the foregoing embodiment, the microphone pin 44 is electrically connected to a positive voltage end, the ground pin 43 is electrically connected to a ground end, and finally a first circuit 52 is charged by using the microphone pin 44 and the ground pin 43.

According to a rechargeable stylus provided in this embodiment of this application, the ring-shaped structure with external screw threads of the plug on the first body is screwed into the ring-shaped structure with internal screw threads of the socket on the second body, to implement a secure structural connection between the first body and the second body, ensuring concentricity of the first body and the second body. This not only ensures that the first body is not apt to fall off or shift from the second body, but also ensures that various contacts of the plug on the first body are in good electrical contact with corresponding pins of the socket on the second body. In addition, the first ring-shaped contact of the plug on the first body is in electrical contact with the first pin of the socket on the second body, and the second ring-shaped contact of the plug on the first body is in electrical contact with the second pin of the socket on the second body, ensuring electric power transmission between the first body and the second body. Moreover, when the first ring-shaped contact and the second ring-shaped contact of the plug on the first body are completely inserted into the headset socket with the microphone pin, the first ring-shaped contact is in electrical contact with the microphone pin of the headset socket, the second ring-shaped contact is in electrical contact with the ground pin of the headset socket, and the microphone pin of the headset socket can provide positive voltage for charging, allowing the headset socket to charge the first body.

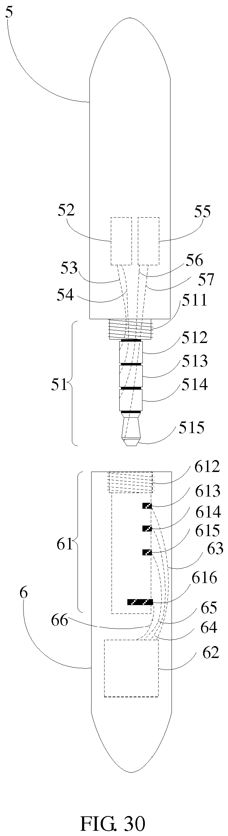

An embodiment of this application provides another rechargeable stylus. As shown in FIG. 30, a difference from the stylus shown in FIG. 21 is that the column-shaped plug 51 shown in FIG. 12 is disposed at a connection end of a first body 5, and a third circuit 55 is disposed inside the first body 5. The third ring-shaped contact 514 is electrically connected to the third circuit 55 by using a fifth conducting wire 56 routed through the ring-shaped structure 511 with external screw threads; and the fourth contact 515 is electrically connected to the third circuit 55 by using a sixth conducting wire 57 routed through the ring-shaped structure 511 with external screw threads. The socket 61 shown in FIG. 18 is disposed at a connection end of a second body 6. The third pin 615 is electrically connected to the second circuit 62 by using a seventh conducting wire 65, and the fourth pin 616 is electrically connected to the second circuit 62 by using an eighth conducting wire 66.

The third circuit 55 may be a circuit used for transmitting data between the first body 5 and the second body 6. It should be noted that any circuit connection form of the third circuit 55 that can be figured out based on actual application by a person skilled in the art shall fall within the protection scope of this embodiment of this application, and details are not described herein.

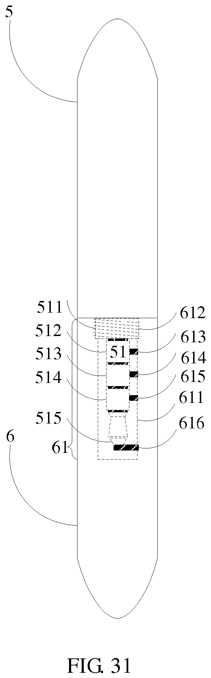

As shown in FIG. 31, when the ring-shaped structure 511 with external screw threads is completely screwed into the ring-shaped structure 612 with internal screw threads, the first ring-shaped contact 512 and the second ring-shaped contact 513 are completely inserted into the jack 611, and the first body 5 and the second body 6 are screwed to form a complete stylus. The first ring-shaped contact 512 is in electrical contact with the first pin 613, the second ring-shaped contact 513 is in electrical contact with the second pin 614, the third ring-shaped contact 514 is in electrical contact with the third pin 615, and the fourth contact 515 is in electrical contact with the fourth pin 616, so that a channel is formed between the first ring-shaped contact 512 and the first pin 613, another channel is formed between the second ring-shaped contact 513 and the second pin 614, a channel is formed between the third ring-shaped contact 514 and the third pin 615, and another channel is formed between the fourth contact 515 and the fourth pin 616. In this case, four conduction channels can be implemented between the first body 5 and the second body 6. To be specific, conduction is implemented between the first conducting wire 53 and the third conducting wire 63, conduction is implemented between the second conducting wire 54 and the fourth conducting wire 64, conduction is implemented between the fifth conducting wire 56 and the seventh conducting wire 65, and conduction is implemented between the sixth conducting wire 57 and the eighth conducting wire 66. Like the stylus shown in FIG. 23, a function of the first ring-shaped contact 512 and the second ring-shaped contact 513 can be reused to transmit electric power or data between the first body 5 and the second body 6. Apart from that, the third ring-shaped contact 514 and the fourth contact 515 can also be used to implement electric power transmission or data transmission between the first body 5 and the second body 6.

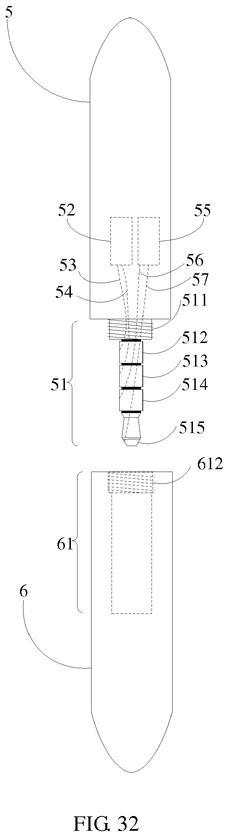

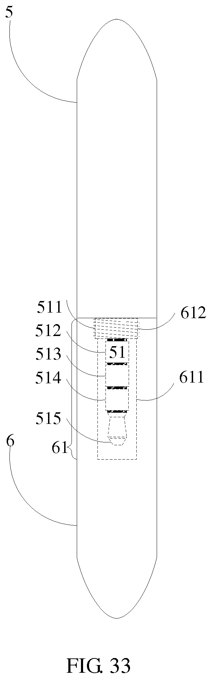

An embodiment of this application provides yet another rechargeable stylus. As shown in FIG. 32, compared with the stylus shown in FIG. 30, the second circuit 62, the third conducting wire 63, the fourth conducting wire 64, the seventh conducting wire 65, the eighth conducting wire 66, and the first pin 613, the second pin 614, the third pin 615, and the fourth pin 616 of the socket 61 are removed. Therefore, a structure of a second body 6 is simpler. This structure is used when a first body 5 and a plug 51 need to be fastened only by screwing a rotational structure 511 with external screw threads and a rotational structure 612 with internal screw threads and no electric power or data exchange is required between the first body 5 and the second body 6. As shown in FIG. 33, when the rotational structure 511 with external screw threads of the first body 5 is completely screwed into the rotational structure 612 with internal screw threads of the second body 6, a first ring-shaped contact 512 and a second ring-shaped contact 513 are completely inserted into a jack 611, and the first body 5 and the second body 6 are screwed to form a complete stylus.

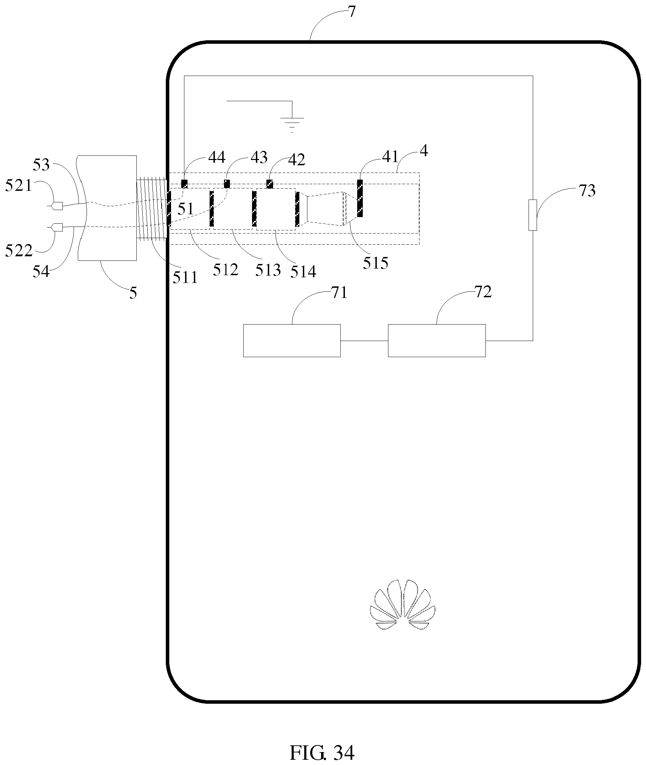

As shown in FIG. 34, when the plug 51 of the first body 5 is completely inserted into the headset socket 4 of the electronic device 7 shown in FIG. 26, the first ring-shaped contact 512 is in electrical contact with the microphone pin 44, and the second ring-shaped contact 513 is in electrical contact with the ground pin 43. Equivalently, the first ring-shaped contact 512 is connected to positive voltage, and the second ring-shaped contact 513 is grounded. In this case, the first ring-shaped contact 512 is electrically connected to a first charging end 521 by using a first conducting wire 53, and the second ring-shaped contact 513 is electrically connected to a second charging end 522 by using a second conducting wire 54. This can implement charging of the first body 5 of the stylus by the electronic device 7, and a third-party cable does not need to be connected to charge the first body 5. Moreover, a third ring-shaped contact 514 is in electrical contact with the right-channel pin 42, and a fourth contact 515 is in electrical contact with the left-channel pin 41. In this case, the right-channel pin 42 and the third ring-shaped contact 514 can transmit a channel of data, and the left-channel pin 41 and the fourth contact 515 can transmit another channel of data. In this way, data can be transmitted from the headset socket 4 of the electronic device 7 to the first body 5.

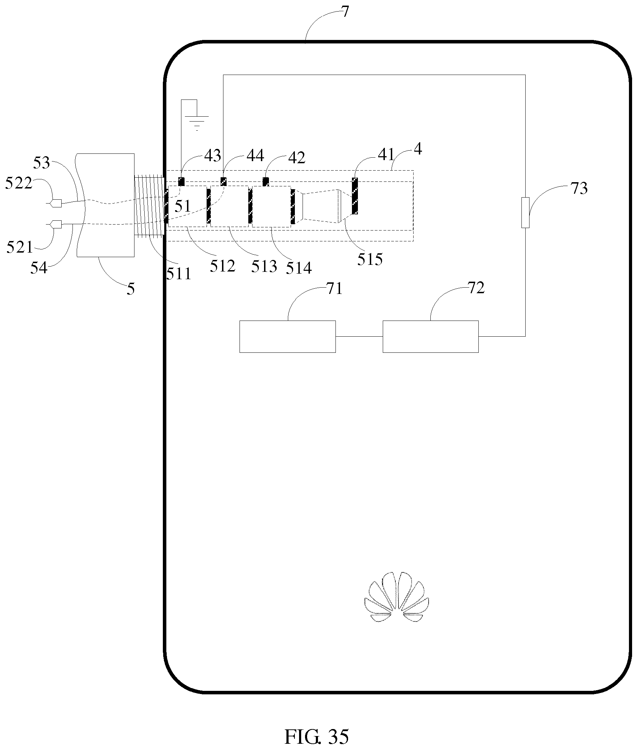

As shown in FIG. 35, when the plug 51 of the first body 5 is completely inserted into the headset socket 4 of the electronic device 7 shown in FIG. 27, the first ring-shaped contact 512 is in electrical contact with the ground pin 43, and the second ring-shaped contact 513 is in electrical contact with the microphone pin 44. Equivalently, the first ring-shaped contact 512 is grounded, and the second ring-shaped contact 513 is connected to the positive voltage. In this case, the first ring-shaped contact 512 is electrically connected to the second charging end 522 by using the first conducting wire 53, and the second ring-shaped contact 513 is electrically connected to the first charging end 521 by using the second conducting wire 54. This can also implement charging of the first body 5 of the stylus by the electronic device 7. Similar to FIG. 34, the third ring-shaped contact 514 is in electrical contact with the right-channel pin 42, and the fourth contact 515 is in electrical contact with the left-channel pin 41. This can implement data transmission from the headset socket 4 of the electronic device 7 to the first body 5. Details are not described herein.

According to the rechargeable stylus provided in this embodiment of this application, a secure structural connection between the first body and the second body is implemented, concentricity of the first body and the second body is ensured, and electric power transmission between the first body and the second body is ensured, so that the first body is charged by using the headset socket. In addition, when the third ring-shaped contact and the fourth contact of the plug on the first body are completely inserted into a common headset socket, the third ring-shaped contact is in electrical contact with a right-channel pin of the headset socket, and the fourth contact is in electrical contact with a left-channel pin of the headset socket, so that data can be transmitted to the first body by using the headset socket.

Compared with a rechargeable stylus using the column-shaped plug 51 shown in FIG. 12 and the socket 61 shown in FIG. 18, a rechargeable stylus using the column-shaped plug 51 shown in FIG. 11 and the socket 61 shown in FIG. 14 reduces two contacts and two pins, so that the plug and the socket are shorter, and more space is available in the rechargeable stylus for disposing other components.

A person skilled in the art may know that the plug 51 shown in FIG. 11 and FIG. 12 in this embodiment of this application may not only be installed on the rechargeable stylus to charge the stylus, but also be installed on a plurality of other types of electronic devices to charge the electronic devices. That is, the stylus in this embodiment of this application may also be used to charge other electronic devices. Details are not described herein. The electronic devices include but are not limited to a virtual reality (virtual reality, VR) device, an augmented reality (augmented reality, AR) device, a smart wearable device, or other various types of electronic components. In addition, the electronic devices may also communicate with a device such as a host or a server in a wired or wireless manner. Used communication means include but are not limited to Wireless Fidelity (wireless fidelity, WiFi), Bluetooth (bluetooth, BT), infrared, a laser, a sound wave, ZigBee (zigbee), and the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (7), comprising a column-shaped plug (51) wherein a first ring-shaped contact (511) and a second ring-shaped contact (513) are disposed in turn from a fixed end to a top end in a radial direction on a body of the plug; a rechargeable first circuit (52) is disposed inside a first body of the electronic device, and the first circuit has two charging ends, with one being a ground end and the other being a positive voltage end; the first ring-shaped contact and the second ring-shaped contact are electrically connected to the two charging ends, respectively; and the first ring-shaped contact and the second ring-shaped contact are allowed to be inserted into a headset socket with a microphone pin and a ground pin, and the microphone pin is capable of providing positive voltage for charging; and
when the first ring-shaped contact and the second ring-shaped contact are completely inserted into the headset socket (4), the first ring-shaped contact is in electrical contact with the ground pin (43) of the headset socket, and the second ring-shaped contact is in electrical contact with the microphone pin (44) of the headset socket; or the first ring-shaped contact is in electrical contact with the microphone pin of the headset socket, and the second ring-shaped contact is in electrical contact with the ground pin of the headset socket, so that the microphone pin is electrically connected to the positive voltage end, the ground pin is electrically connected to the ground end, and the first circuit is charged by using the microphone pin and the ground pin,
wherein the electronic device further comprises a second body (2), a socket (61) is disposed at a connection end of the second body, the socket comprises an insulated socket body, a cavity-structured jack (611) is provided inside the socket body, and a first pin and a second pin are disposed in turn from a jack hole inwards on an inner wall of the jack; and
when the first ring-shaped contact and the second ring-shaped contact are completely inserted into the jack, the first ring-shaped contact is in electrical contact with the first pin, and the second ring-shaped contact is in electrical contact with the second pin,
**characterised in that**
the electronic device is a rechargeable stylus, and wherein the column-shaped plug is disposed at one end of the first body.

2. The rechargeable stylus according to claim 1, wherein a third ring-shaped contact and a fourth contact are further disposed in turn from the fixed end to the top end in the radial direction on the body of the plug; and the headset socket (4) further has a left-channel pin and a right-channel pin; and
when the first ring-shaped contact and the second ring-shaped contact are completely inserted into the headset socket, the third ring-shaped contact is in electrical contact with the right-channel pin, and the fourth contact is in electrical contact with the left-channel pin.

3. The rechargeable stylus according to claim 1, wherein a third pin and a fourth pin are further disposed in turn from the jack hole inwards in a radial direction on the inner wall of the jack; and
when the first ring-shaped contact and the second ring-shaped contact are completely inserted into the jack, the third pin is in electrical contact with the third ring-shaped contact, and the fourth pin is in electrical contact with the fourth contact (515).

4. The rechargeable stylus according to claim 1 or 3, wherein a ring-shaped structure (511) with external screw threads is further disposed at the fixed end of the body of the plug, a ring-shaped structure with internal screw threads is disposed at the jack hole in the inner wall of the jack, and the ring-shaped structure with internal screw threads and the ring-shaped structure with external screw threads are allowed to be mutually screwed; and
when the ring-shaped structure with internal screw threads is completely screwed into the ring-shaped structure with external screw threads, the first ring-shaped contact and the second ring-shaped contact are completely inserted into the jack, and the first body and the second body are screwed to form a complete stylus.

## Patentansprüche

1. Elektronische Vorrichtung (7), umfassend einen säulenförmigen Stecker (51), wobei ein erster ringförmiger Kontakt (511) und ein zweiter ringförmiger Kontakt (513) von einem festen Ende zu einem oberen Ende hin abwechselnd in einer radialen Richtung an einem Körper des Steckers angeordnet sind; eine wiederaufladbare erste Schaltung (52) in einem ersten Körper der elektronischen Vorrichtung angeordnet ist und die erste Schaltung zwei Ladeenden aufweist, wobei eines ein Erdungsende und das andere ein Ende mit positiver Spannung ist; der erste ringförmige Kontakt und der zweite ringförmige Kontakt jeweils elektrisch mit den zwei Ladeenden verbunden sind; und der erste ringförmige Kontakt und der zweite ringförmige Kontakt in eine Headset-Buchse mit einem Mikrofonpin und einem Erdungspin eingeführt werden können und der Mikrofonpin in der Lage ist, eine positive Spannung zum Laden bereitzustellen; und
wenn der erste ringförmige Kontakt und der zweite ringförmige Kontakt vollständig in die Headset-Buchse (4) eingeführt sind, der erste ringförmige Kontakt in elektrischem Kontakt mit dem Erdungspin (43) der Headset-Buchse steht und der zweite ringförmige Kontakt in elektrischem Kontakt mit dem Mikrofonpin (44) der Headset-Buchse steht; oder der erste ringförmige Kontakt in elektrischem Kontakt mit dem Mikrofonpin der Headset-Buchse steht und der zweite ringförmige Kontakt in elektrischem Kontakt mit dem Erdungspin der Headset-Buchse steht, sodass der Mikrofonpin elektrisch mit dem Ende mit positiver Spannung verbunden ist, der Erdungspin elektrisch mit dem Erdungsende verbunden ist und die erste Schaltung mithilfe des Mikrofonpins und des Erdungspins aufgeladen wird,
wobei die elektronische Vorrichtung ferner einen zweiten Körper (2) umfasst, eine Buchse (61) an einem Verbindungsende des zweiten Körpers angeordnet ist, die Buchse einen isolierten Buchsenkörper umfasst, eine Steckerbuchse (611) mit Hohlraumstruktur im Inneren des Buchsenkörpers bereitgestellt ist und ein erster Pin und ein zweiter Pin abwechselnd von einem Steckerbuchsenloch einwärts an einer Innenwand der Steckerbuchse angeordnet sind; und
wenn der erste ringförmige Kontakt und der zweite ringförmige Kontakt vollständig in die Buchse eingeführt sind, der erste ringförmige Kontakt in elektrischem Kontakt mit dem ersten Pin steht und der zweite ringförmige Kontakt in elektrischem Kontakt mit dem zweiten Pin steht,
**dadurch gekennzeichnet, dass**
die elektronische Vorrichtung ein wiederaufladbarer Stift ist, und wobei der säulenförmige Stecker an einem Ende des ersten Körpers angeordnet ist.

2. Wiederaufladbarer Stift nach Anspruch 1, wobei ferner ein dritter ringförmiger Kontakt und ein vierter Kontakt abwechselnd von dem festen Ende zu dem oberen Ende hin in der radialen Richtung an dem Körper des Steckers angeordnet sind; und die Headset-Buchse (4) ferner einen Pin für den linken Kanal und einen Pin für den rechten Kanal aufweist; und
wenn der erste ringförmige Kontakt und der zweite ringförmige Kontakt vollständig in die Headset-Buchse eingeführt sind, der dritte ringförmige Kontakt in elektrischem Kontakt mit dem Pin für den rechten Kanal steht und der vierte Kontakt in elektrischem Kontakt mit dem Pin für den linken Kanal steht.

3. Wiederaufladbarer Stift nach Anspruch 1, wobei ferner ein dritter Pin und ein vierter Pin abwechselnd von dem Steckerbuchsenloch einwärts in einer radialen Richtung an der Innenwand der Steckerbuchse angeordnet sind; und
wenn der erste ringförmige Kontakt und der zweite ringförmige Kontakt vollständig in die Buchse eingeführt sind, der dritte Pin in elektrischem Kontakt mit dem dritten ringförmigen Kontakt steht und der vierte Pin in elektrischem Kontakt mit dem vierten Kontakt (515) steht.

4. Wiederaufladbarer Stift nach Anspruch 1 oder 3, wobei eine ringförmige Struktur (511) mit Außengewinde ferner an dem festen Ende des Körpers des Steckers angeordnet ist, eine ringförmige Struktur mit Innengewinde an dem Buchsenloch in der Innenwand der Buchse angeordnet ist und die ringförmige Struktur mit Innengewinde und die ringförmige Struktur mit Außengewinde miteinander verschraubt werden können; und
wenn die ringförmige Struktur mit Innengewinde vollständig in die Ringstruktur mit Außengewinde eingeschraubt ist, der erste ringförmige Kontakt und der zweite ringförmige Kontakt vollständig in die Buchse eingeführt sind und der erste Körper und der zweite Körper verschraubt sind, um einen vollständigen Stift zu bilden.

## Revendications

1. Dispositif électronique (7), comprenant une fiche en forme de colonne (51), dans lequel un premier contact en forme d'anneau (511) et un deuxième contact en forme d'anneau (513) sont disposés tour à tour d'une extrémité fixe vers une extrémité supérieure dans une direction radiale sur un corps de la fiche ; un premier circuit pouvant être rechargé (52) est disposé à l'intérieur d'un premier corps du dispositif électronique, et le premier circuit a deux extrémités de charge, l'une étant une extrémité de masse et l'autre étant une extrémité de tension positive ; le premier contact en forme d'anneau et le deuxième contact en forme d'anneau sont électriquement connectés aux deux extrémités de charge, respectivement ; et le premier contact en forme d'anneau et le deuxième contact en forme d'anneau peuvent être insérés dans une prise de casque avec une broche de microphone et une broche de masse, et la broche de microphone est capable de fournir une tension positive pour la charge ; et lorsque le premier contact en forme d'anneau et le deuxième contact en forme d'anneau sont complètement insérés dans la prise de casque (4), le premier contact en forme d'anneau est en contact électrique avec la broche de masse (43) de la prise de casque, et le deuxième contact en forme d'anneau est en contact électrique avec la broche de microphone (44) de la prise de casque ; ou le premier contact en forme d'anneau est en contact électrique avec la broche de microphone de la prise de casque, et le deuxième contact en forme d'anneau est en contact électrique avec la broche de masse de la prise de casque, de sorte que la broche de microphone est électriquement connectée à l'extrémité de tension positive, la broche de masse est électriquement connectée à l'extrémité de masse, et le premier circuit est chargé à l'aide de la broche de microphone et de la broche de masse,
dans lequel le dispositif électronique comprend en outre un second corps (2), une prise (61) est disposée à une extrémité de connexion du second corps, la prise comprend un corps de prise isolé, un vérin à structure de cavité (611) est prévu à l'intérieur du corps de prise, et une première broche et une deuxième broche sont disposées tour à tour à partir d'un trou de vérin vers l'intérieur sur une paroi interne du vérin ; et lorsque le premier contact en forme d'anneau et le deuxième contact en forme d'anneau sont complètement insérés dans la prise, le premier contact en forme d'anneau est en contact électrique avec la première broche, et le deuxième contact en forme d'anneau est en contact électrique avec la deuxième broche,
**caractérisé en ce que**
le dispositif électronique est un stylet pouvant être rechargé, et dans lequel la fiche en forme de colonne est disposée à une extrémité du premier corps.

2. Stylet rechargeable selon la revendication 1, dans lequel un troisième contact en forme d'anneau et un quatrième contact sont en outre disposés tour à tour de l'extrémité fixe vers l'extrémité supérieure en direction radiale sur le corps de la fiche ; et la prise de casque (4) a en outre une broche de canal gauche et une broche de canal droit ; et
lorsque le premier contact en forme d'anneau et le deuxième contact en forme d'anneau sont complètement insérés dans la prise de casque, le troisième contact en forme d'anneau est en contact électrique avec la broche de canal droit, et le quatrième contact est en contact électrique avec la broche de canal gauche.

3. Stylet rechargeable selon la revendication 1, dans lequel une troisième broche et une quatrième broche sont en outre disposées tour à tour depuis le trou du vérin vers l'intérieur dans une direction radiale sur la paroi interne du vérin ; et lorsque le premier contact en forme d'anneau et le deuxième contact en forme d'anneau sont complètement insérés dans la prise, la troisième broche est en contact électrique avec le troisième contact en forme d'anneau, et la quatrième broche est en contact électrique avec le quatrième contact (515).

4. Stylet rechargeable selon la revendication 1 ou 3, dans lequel une structure en forme d'anneau (511) avec filetages de vis externes est en outre disposée à l'extrémité fixe du corps de la fiche, une structure en forme d'anneau avec filetages de vis internes est disposée au niveau du trou de vérin dans la paroi interne du vérin, et la structure en forme d'anneau avec filetages de vis internes et la structure en forme d'anneau avec filetages de vis externes peuvent être mutuellement vissées ;
et
lorsque la structure en forme d'anneau avec filetages de vis internes est complètement vissée dans la structure en forme d'anneau avec filetages de vis externes, le premier contact en forme d'anneau et le deuxième contact en forme d'anneau sont complètement insérés dans la prise, et le premier corps et le second corps sont vissés pour former un stylet complet.
